# EUROPÄISCHE PATENTSCHRIFT

(11) **EP 3 068 691 B1**
(45) Veröffentlichungstag und Bekanntmachung des Hinweises auf die Patenterteilung: **15.07.2020**
(21) Anmeldenummer: 14796484.5
(22) Anmeldetag: 07.11.2014
(51) Int. Cl.: B64D 11/06, B60N 2/02

(54) **STEUEREINHEITSVORRICHTUNG FÜR EINEN FLUGZEUGSITZ**
CONTROL UNIT DEVICE FOR AN AIRCRAFT SEAT
DISPOSITIF DE COMMANDE DE SIÈGE D'AVION

(30) Priorität: 13.11.2013 DE 102013112491
(43) Veröffentlichungstag der Anmeldung: 21.09.2016
(73) Patentinhaber: Recaro Aircraft Seating GmbH & Co. KG, 74523 Schwäbisch Hall (DE)
(72) Erfinder: PHILIPP, Adrian, 74544 Michelbach an der Bilz (DE); GERNGROSS, Michael, 74523 Michelfeld (DE); STRECKERT, Michael, 74523 Schwäbisch Hall (DE); MEHMEL, Jürgen, 74523 Schwäbisch Hall (DE); LAUBENBERGER, Jörg, 71540 Murrhardt (DE)
(74) Vertreter: Daub, Thomas
(86) Internationale Anmeldenummer: PCT/EP2014/074074
(87) Internationale Veröffentlichungsnummer: WO 2015/071193

(56) Entgegenhaltungen:
- WO-A2-2007/109359
- US-A1- 2011 282 495

## Beschreibung

### Stand der Technik

Die Erfindung betrifft eine Steuereinheitsvorrichtung nach dem Oberbegriff des Patentanspruchs 1.

Es ist bereits eine Steuereinheitsvorrichtung für einen Flugzeugsitz, mit einer Steuer-und/oder Regeleinheit, mit zumindest einer mit der Steuer- und/oder Regeleinheit gekoppelten Aktuatoreinheit und mit zumindest einer Zusatzeinheit vorgeschlagen worden. Dokument WO 2007/109359 offenbart nämlich eine Steuereinheitsvorrichtung für einen Flugzeugsitz, mit einer Steuer- und/oder Regeleinheit, mit zumindest einer mit der Steuer- und/oder Regeleinheit gekoppelten Aktuatoreinheit, welche zumindest einen Aktuator umfasst, der dazu vorgesehen ist, elektrische Signale in eine Bewegung umzusetzen, und mit zumindest einer Zusatzeinheit, wobei die Zusatzeinheit über die Aktuatoreinheit mit der Steuer- und/oder Regeleinheit gekoppelt ist, dass die Aktuatoreinheit zumindest ein Steckerelement umfasst, über das die Aktuatoreinheit mit der Steuer- und/oder Regeleinheit gekoppelt ist, wobei die Zusatzeinheit über ein anderes Steckerelement an die Aktuatoreinheit angebunden ist, wobei das Steckerelement zumindest einen Pin aufweist, über den die Aktuatoreinheit mit der Steuer- und/oder Regeleinheit verbunden ist, und zumindest einen weiteren Pin aufweist, über den die Zusatzeinheit mit der Aktuatoreinheit verbunden ist, wobei die Aktuatoreinheit eine integrierte Steuereinheit aufweist, die zumindest einen Eingang aufweist, über den der Pin für die Zusatzeinheit angebunden ist.

Die Aufgabe der Erfindung besteht insbesondere darin, eine gattungsgemäße Vorrichtung mit verbesserten Eigenschaften hinsichtlich einer Einfachheit und einer Bauteilanzahl bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Steuereinheitsvorrichtung für einen Flugzeugsitz, mit einer Steuer- und/oder Regeleinheit, mit zumindest einer mit der Steuer- und/oder Regeleinheit gekoppelten Aktuatoreinheit, welche zumindest einen Aktuator umfasst, der dazu vorgesehen ist, elektrische Signale in eine Bewegung umzusetzen, und mit zumindest einer Zusatzeinheit, wobei die Zusatzeinheit über die Aktuatoreinheit mit der Steuer- und/oder Regeleinheit gekoppelt ist,
wobei die Aktuatoreinheit zumindest ein Steckerelement umfasst, über das die Aktuatoreinheit mit der Steuer- und/oder Regeleinheit gekoppelt ist, wobei die Zusatzeinheit über das Steckerelement an die Aktuatoreinheit angebunden ist, wobei das Steckerelement zumindest einen Pin aufweist, über den die Aktuatoreinheit mit der Steuer- und/oder Regeleinheit verbunden ist, und zumindest einen weiteren Pin aufweist, über den die Zusatzeinheit mit der Aktuatoreinheit verbunden ist,dadurch gekennzeichnet, dassdie Aktuatoreinheit eine integrierte Steuereinheit aufweist, die zumindest einen Eingang aufweist, über den der Pin für die Zusatzeinheit angebunden ist.

Es wird vorgeschlagen, dass die Zusatzeinheit über die Aktuatoreinheit mit der Steuer- und/oder Regeleinheit gekoppelt ist. Unter einer "Steuer- und/oder Regeleinheit" soll insbesondere eine Einheit mit zumindest einem Steuergerät verstanden werden. Unter einem "Steuergerät" soll insbesondere eine Einheit mit einer Prozessoreinheit und mit einer Speichereinheit sowie mit einem in der Speichereinheit gespeicherten Betriebsprogramm verstanden werden. Grundsätzlich kann die Steuer- und/oder Regeleinheit mehrere untereinander verbundene Steuergeräte aufweisen, die vorzugsweise dazu vorgesehen sind, über ein Bus-System, wie insbesondere ein CAN-Bus-System, miteinander zu kommunizieren. Unter einem "Flugzeugsitz" soll dabei insbesondere ein Sitz verstanden werden, der in einer Flugzeugkabine angeordnet ist und dabei vorzugsweise auf einem Kabinenboden der Flugzeugkabine aufgeständert ist. Unter einer "Aktuatoreinheit" soll dabei eine Einheit aus zumindest einem Aktuator verstanden werden. Unter einem "Aktuator" soll insbesondere ein mechatronisches Bauteil verstanden werden, das dazu vorgesehen ist, elektrische Signale in eine Bewegung, beispielsweise in eine Schwenk- und/oder Linearbewegung, umzusetzen. Dabei umfasst ein Aktuator zumindest eine integrierte Steuereinheit, die den Aktuator steuert, sowie Eingangssignale verarbeitet und/oder Ausgangssignale an den Aktuator oder andere Elektronikkomponenten weiterleitet. Unter einer "Zusatzeinheit" soll dabei insbesondere eine elektronische Einheit verstanden werden, die zum Senden und/oder Empfangen von elektrischen und/oder elektronischen Signalen vorgesehen ist. Unter "gekoppelt" soll dabei insbesondere elektrisch und/oder elektronisch miteinander verbunden verstanden werden, sodass die gekoppelten Elemente, wie insbesondere die Steuer- und/oder Regeleinheit und die Zusatzeinheit, miteinander kommunizieren, also elektrische und/oder elektronische Signale miteinander austauschen können. Unter "über die Aktuatoreinheit gekoppelt" soll dabei insbesondere verstanden werden, dass eine Kommunikation zweier Elemente, die über die Aktuatoreinheit miteinander gekoppelt sind, über die Aktuatoreinheit erfolgt, also elektrische und/oder elektronische Signale, die zur Kommunikation dienen, zumindest teilweise über eine Elektronik der Aktuatoreinheit geleitet werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft eine Zusatzeinheit insbesondere vorteilhaft an eine Steuer- und/oder Regeleinheit angebunden werden, wodurch insbesondere eine besonders einfache und in Bezug auf eine Bauteilanzahl vorteilhafte Steuereinheitsvorrichtung bereitgestellt wird.

Erfindungsgemäß wird vorgeschlagen, dass die Aktuatoreinheit zumindest ein Steckerelement umfasst, über das die Aktuatoreinheit mit der Steuer- und/oder Regeleinheit gekoppelt ist, wobei die Zusatzeinheit über das Steckerelement an die Aktuatoreinheit angebunden ist. Unter einem "Steckerelement" soll dabei insbesondere ein Element verstanden werden, das elektrische Kontakte bereitstellt, um ein elektrisches und/oder elektronisches Bauteil, wie insbesondere eine Aktuatoreinheit oder eine Steuer- und/oder Regeleinheit, über ein Kabel und/oder ein weiteres Steckerelement elektrisch und/oder elektronisch mit anderen elektrischen und/oder elektronischen Bauteilen zu koppeln. Dadurch kann die zumindest eine Zusatzeinheit besonders einfach über die zumindest eine Aktuatoreinheit an die Steuer- und/oder Regeleinheit angebunden werden.

Erfindungsgemäß wird vorgeschlagen, dass das Steckerelement zumindest einen Pin aufweist, über den die Aktuatoreinheit mit der Steuer- und/oder Regeleinheit verbunden ist, und zumindest einen weiteren Pin aufweist, über den die Zusatzeinheit mit der Aktuatoreinheit verbunden ist. Unter einem "Pin" soll dabei insbesondere ein elektrischer Kontaktpunkt verstanden werden, der direkt mit einem elektrischen Kontaktpunkt eines korrespondierenden Steckerelements verbunden ist, um so einen elektrischen Strom von dem einen Steckerelement in das andere Steckerelement zu leiten. Dadurch können sowohl die Steuer- und/oder Regeleinheit als auch die Zusatzeinheit besonders einfach und vorteilhaft an die Aktuatoreinheit angebunden werden.

Erfindungsgemäß wird vorgeschlagen, dass die Aktuatoreinheit eine integrierte Steuereinheit aufweist, die zumindest einen Eingang aufweist, über den der Pin für die Zusatzeinheit angebunden ist. Unter einer "integrierten Steuereinheit" soll dabei insbesondere ein in die Aktuatoreinheit integrierter Mikroprozessor verstanden werden, der zumindest Aktuatoren der Aktuatoreinheit ansteuert, Eingangssignale verarbeitet und Ausgangssignale ausgibt. Dadurch kann die Zusatzeinheit besonders vorteilhaft an die Aktuatoreinheit angebunden werden.

Zudem wird vorgeschlagen, dass die Zusatzeinheit als ein Sensorelement ausgebildet ist. Unter einem "Sensorelement" soll dabei insbesondere ein Element verstanden werden, das aufgrund einer Schaltstellung und/oder einer erfassten physikalischen Größe ein entsprechendes elektrisches und/oder elektronisches Signal ausgibt. Dabei kann das Sensorelement beispielsweise als ein Lagesensor, ein Schalter, ein Positionssensor oder ein Abstandssensor ausgebildet sein. Dadurch kann ein Sensorelement, über das Steuersignale zur Verarbeitung an die Steuer- und/oder Regeleinheit weitergeleitet werden sollen, besonders einfach und vorteilhaft an die Steuer- und/oder Regeleinheit angebunden werden.

Ferner wird vorgeschlagen, dass die Zusatzeinheit als ein Aktorelement ausgebildet ist. Unter einem "Aktorelement" soll dabei insbesondere ein Element verstanden werden, das mit einer definierten Aktion auf ein definiertes Eingangssignal reagiert. Dabei kann ein Aktorelement als ein Lichtelement, wie beispielsweise eine LED, als ein Schaltventil oder als eine Verriegelungsvorrichtung, wie beispielsweise als eine Magnetstiftverriegelung, für eine Mechanik/Kinematik ausgebildet sein. Dabei ist ein Aktorelement insbesondere ohne eine integrierte Steuereinheit ausgebildet und reagiert stupide auf ein Eingangssignal. Dadurch kann ein Aktorelement, das von der Steuer- und/oder Regeleinheit angesteuert wird, besonders einfach und vorteilhaft an die Steuer- und/oder Regeleinheit angebunden werden.

Weiter wird vorgeschlagen, dass das Steckerelement als ein luftfahrtzugelassenes Steckerelement ausgebildet ist. Unter einem "luftfahrtzugelassenen Steckerelement" soll dabei insbesondere ein Steckerelement verstanden werden, das von einer Luftfahrtbehörde für einen Einsatz in einem Flugzeug zugelassen ist. Dadurch kann das Steckerelement besonders vorteilhaft zur Verwendung in einem Flugzeugsitz ausgebildet werden.

Es wird weiterhin vorgeschlagen, dass das Steckerelement als ein D-Sub- 9-Stecker ausgebildet ist. Dadurch kann das Steckerelement besonders vorteilhaft ausgebildet werden.

Zudem wird ein Verfahren zur Anbindung einer Aktuatoreinheit und einer Zusatzeinheit an eine Steuer- und/oder Regeleinheit vorgeschlagen, wobei die Zusatzeinheit über die Aktuatoreinheit an die Steuer- und/oder Regeleinheit angebunden wird.

Die erfindungsgemäße Steuereinheitsvorrichtung soll hierbei nicht auf die oben beschriebene Anwendung und Ausführungsform beschränkt sein. Insbesondere kann die erfindungsgemäße Steuereinheitsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Flugzeugsitzes mit einer schematischen Darstellung einer erfindungsgemäßen Steuereinheitsvorrichtung und
- Fig. 2: eine schematische Darstellung eines Schaltplans der erfindungsgemäßen Steuereinheitsvorrichtung.

### Beschreibung des Ausführungsbeispiels

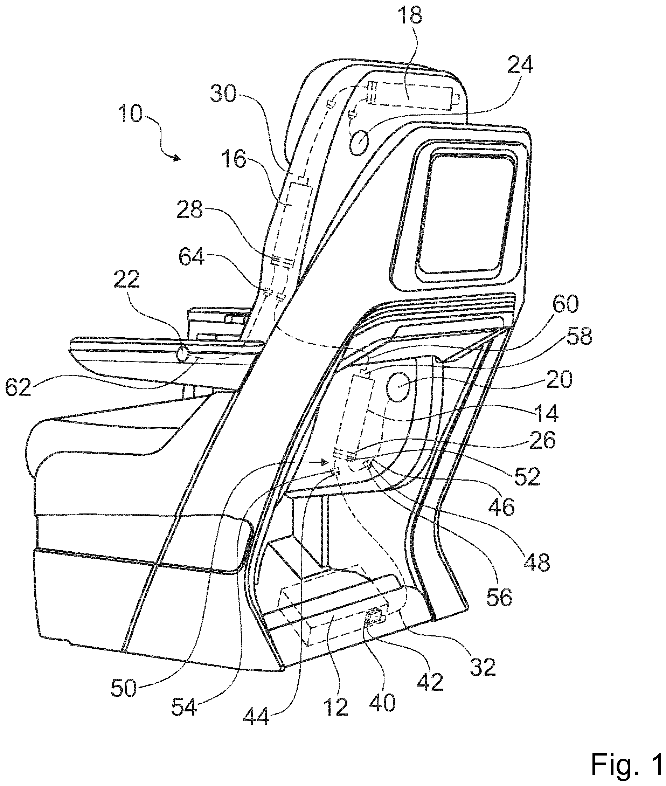

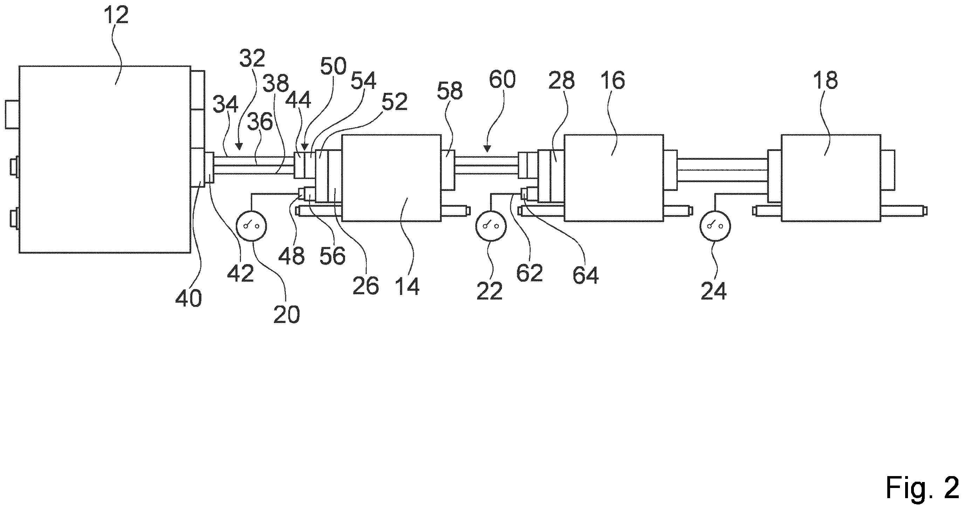

In den Figuren 1 und 2 ist eine erfindungsgemäße Steuereinheitsvorrichtung für einen Flugzeugsitz 10 dargestellt. Figur 1 zeigt schematisch einen Flugzeugsitz 10. Der in Figur 1 dargestellte Flugzeugsitz 10 soll hierbei nur schematisch und als Beispiel für einen Flugzeugsitz dargestellt sein. Dabei ist es grundsätzlich auch denkbar, dass der Flugzeugsitz 10 eine andere, dem Fachmann als sinnvoll erscheinende Ausgestaltung aufweist. Der Flugzeugsitz 10 ist als ein Business- oder First-Class-Flugzeugsitz ausgebildet. Grundsätzlich ist es natürlich auch denkbar, dass der Flugzeugsitz 10 als ein Economy-Class-Flugzeugsitz ausgebildet ist. Der Flugzeugsitz 10 ist in einem nicht näher dargestellten Flugzeug aufgeständert. Dazu weist der Flugzeugsitz 10 eine Aufständereinheit auf, mittels der der Flugzeugsitz 10 fest mit einem Kabinenboden des Flugzeugs verbunden ist. Die Steuereinheitsvorrichtung umfasst eine Steuer- und Regeleinheit 12. Die Steuer- und Regeleinheit 12 ist zur Steuerung von elektrischen und/oder elektronischen Komponenten des Flugzeugsitzes 10 vorgesehen. Grundsätzlich ist es auch denkbar, dass die Steuer- und Regeleinheit 12 zur Steuerung von elektrischen und/oder elektronischen Komponenten mehrerer Flugzeugsitze 10 vorgesehen ist. Das nicht näher dargestellte Flugzeug umfasst eine nicht näher dargestellte und beschriebene zentrale Steuer- und Regeleinheit, mit der die Steuer- und Regeleinheit 12 verbunden ist. Dabei ist die Steuer- und Regeleinheit 12 des Flugzeugsitzes 10 zusammen mit anderen Steuer- und Regeleinheiten des Flugzeugs, beispielsweise mit anderen Steuer- und Regeleinheiten 12 anderer Flugzeugsitze 10, über eine geeignete Datenverbindung mit der zentralen Steuer- und Regeleinheit des Flugzeugs gekoppelt.

Die erfindungsgemäße Steuereinheitsvorrichtung umfasst eine erste Aktuatoreinheit 14. Die Aktuatoreinheit 14 umfasst einen Aktuator, der zur Verstellung einer Position einer Rückenlehne 30 des Flugzeugsitzes 10 vorgesehen ist. Die Aktuatoreinheit 14 umfasst dabei eine integrierte Steuereinheit und eine mittels der integrierten Steuereinheit antreibbare Antriebseinheit, die als ein Elektromotor ausgebildet ist. Die Aktuatoreinheit 14 umfasst ein Mitnahmeelement, über das der Aktuator über eine Koppelstelle mit dem Flugzeugsitz 10 verbunden ist und über das eine Bewegung zur entsprechenden Verstellung des Flugzeugsitzes 10 an den Flugzeugsitz 10 weitergeleitet wird. Grundsätzlich ist es auch denkbar, dass die Aktuatoreinheit als eine andere, dem Fachmann als sinnvoll erscheinende Aktuatoreinheit ausgebildet ist, die insbesondere zur Verstellung anderer Bereiche und Bauteile des Flugzeugsitzes 10 vorgesehen ist. Die Steuereinheitsvorrichtung umfasst eine zweite Aktuatoreinheit 16 und eine dritte Aktuatoreinheit 18, die zur Verstellung anderer Bereiche und Bauteile des Flugzeugsitzes 10 vorgesehen sind. Dabei ist es beispielsweise auch denkbar, dass die Aktuatoreinheiten 14, 16, 18 zur Verstellung eines Bildschirms, zur Verstellung einer Fußstütze oder zur Verstellung eines anderen Bauteils des Flugzeugsitzes 10 ausgebildet ist. Dabei ist es denkbar, dass die entsprechende Aktuatoreinheit 14, 16, 18 zur Verstellung des entsprechenden Bauteils des Sitzes translatorische und/oder rotatorische Bewegungen auslöst. Es wird hierbei nur die erste Aktuatoreinheit 14 näher beschrieben, wobei eine Beschreibung der ersten Aktuatoreinheit 14 auch zur Erläuterung der zweiten Aktuatoreinheit 16 und der dritten Aktuatoreinheit 18 herangezogen werden kann.

Die erste Aktuatoreinheit 14 ist mit der Steuer- und Regeleinheit 12 des Flugzeugsitzes 10 gekoppelt. Dabei sind die Aktuatoreinheit 14 und die Steuer- und Regeleinheit 12 über ein Datenkabel 32 miteinander verbunden. Das Datenkabel 32 weist dabei drei Leitungen 34, 36, 38 auf, die die Aktuatoreinheit 14 mit der Steuer- und Regeleinheit 12 verbinden. Eine der Leitungen 36 ist dabei als eine Kommunikationsleitung ausgebildet, über die Signale zum Informationsaustausch zwischen der Steuer- und Regeleinheit 12 und der Aktuatoreinheit 14 übermittelt werden. Grundsätzlich ist es auch denkbar, dass das Datenkabel 32 eine andere Anzahl an Leitungen 34, 36, 38 aufweist, über die die Aktuatoreinheit 14 mit der Steuer- und Regeleinheit 12 gekoppelt sind. Die Steuer- und Regeleinheit 12 weist ein Steckerelement 40 auf, das korrespondierend zu einem Steckerelement 42 des Datenkabels 32 ausgebildet ist. Über das Steckerelement 40 der Steuer- und Regeleinheit 12 und das Steckerelement 42 des Datenkabels 32 ist das Datenkabel 32 mit der Steuer- und Regeleinheit 12 verbunden und sind die Leitungen 34, 36, 38 des Datenkabels 32 elektrisch mit einer entsprechenden Elektronik der Steuer- und Regeleinheit 12 gekoppelt.

Die Aktuatoreinheit 14 umfasst ein erstes Steckerelement 26. Die Aktuatoreinheit 14 ist über das Steckerelement 26 mit der Steuer- und Regeleinheit 12 gekoppelt. Das Steckerelement 26 ist als ein luftfahrtzugelassenes Steckerelement ausgebildet. Das Steckerelement 26 ist dabei als ein D-Sub 9 Stecker ausgebildet. Das Datenkabel 32, das zur Anbindung der Aktuatoreinheit 14 an die Steuer- und Regeleinheit 12 vorgesehen ist, umfasst ein zweites Steckerelement 44, das zur Verbindung mit dem Steckerelement 26 der Aktuatoreinheit 14 vorgesehen ist. Ist das Steckerelement 26 der Aktuatoreinheit 14 mit dem zweiten Steckerelement 44 des Datenkabels 32 verbunden, ist die Aktuatoreinheit 14 über das Datenkabel 32 elektrisch mit der Steuer- und Regeleinheit 12 gekoppelt. Dabei weist das Steckerelement 26 der Aktuatoreinheit 14 mehrere nicht näher dargestellte Pins auf, über die die Aktuatoreinheit 14 mit der Steuer- und Regeleinheit 12 verbunden ist. Die Pins sind als Kontaktelemente des Steckerelements 26 der Aktuatoreinheit 14 ausgebildet, die elektrisch mit einer internen Elektronik der Aktuatoreinheit 14 verbunden sind. Über die Pins des Steckerelements 26 wird die an den entsprechenden Pin angeschlossene Elektronik elektrisch mit einer entsprechenden Leitung 34, 36, 38 eines entsprechenden Datenkabels 32, das mittels seines Steckerelements 44 mit dem Steckerelement 26 der Aktuatoreinheit 14 angebunden ist, verbunden.

Die Steuereinheitsvorrichtung umfasst eine erste Zusatzeinheit 20. Die erste Zusatzeinheit 20 ist als ein Sensorelement ausgebildet. Die als Sensorelement ausgebildete erste Zusatzeinheit 20 ist dazu vorgesehen, in Abhängigkeit von einer physikalischen Gegebenheit ein entsprechendes Sensorsignal auszugeben. Die als Sensorelement ausgebildete Zusatzeinheit 20 ist dabei als ein Lagesensor ausgebildet und stellt ein von einer Lage der Rückenlehne 30 abhängiges Signal bereit. Grundsätzlich ist es auch denkbar, dass die als Sensorelement ausgebildete Zusatzeinheit 20 als ein anderer, dem Fachmann als sinnvoll erscheinender Sensor ausgebildet ist, wie beispielsweise ein Temperatursensor, ein Kraftsensor oder ein Abstandssensor. Die erste Zusatzeinheit 20 ist über die erste Aktuatoreinheit 14 mit der Steuer- und Regeleinheit 12 gekoppelt. Die erste Zusatzeinheit 20 ist direkt mit der ersten Aktuatoreinheit 14 verbunden. Ein von der als Sensorelement ausgebildeten Zusatzeinheit 20 ausgegebenes Signal wird dabei zunächst in die erste Aktuatoreinheit 14 und von da über das Datenkabel 32 an die Steuer- und Regeleinheit 12 weitergeleitet, wo es dann verarbeitet wird. Grundsätzlich ist es dabei auch denkbar, dass das von der als Sensorelement ausgebildeten Zusatzeinheit 20 bereitgestellte Signal direkt von der integrierten Steuereinheit der Aktuatoreinheit 14 verarbeitet wird. Dabei ist es denkbar, dass das Signal, das von der als Sensorelement ausgebildeten Zusatzeinheit 20 bereitgestellt wird, nach der Verarbeitung in der integrierten Steuereinheit an die Steuer- und Regeleinheit 12 der Steuereinheitsvorrichtung weitergeleitet wird, oder auch, dass die integrierte Steuereinheit der Aktuatoreinheit 14 aufgrund des in der integrierten Steuereinheit verarbeiteten Signals der Zusatzeinheit 20 direkt ein Ausgangsignal an einen Aktuator der Aktuatoreinheit 14 oder an eine andere Aktuatoreinheit 14 sendet.

Die erste Zusatzeinheit 20 ist über das Steckerelement 26 der Aktuatoreinheit 14 an die Aktuatoreinheit 14 angebunden. Das Steckerelement 26 weist zwei weitere Pins auf, über die die Zusatzeinheit 20 an die Aktuatoreinheit 14 angeschlossen ist. Die zwei Pins sind als Sensoreingänge der Aktuatoreinheit 14 ausgebildet. Über die zwei Pins ist die an das Steckerelement 26 angeschlossene Zusatzeinheit 20 mit der internen Elektronik der Aktuatoreinheit 14 gekoppelt. Die integrierte Steuereinheit des Aktuatorelements weist zwei Eingänge auf, über die jeweils ein Pin des Steckerelements 26 der Aktuatoreinheit 14 für die Zusatzeinheit 20 angebunden ist. Das von der Zusatzeinheit 20 bereitgestellte Signal wird über die Pins an die integrierte Steuereinheit der Aktuatoreinheit 14 geleitet und dort verarbeitet. Grundsätzlich ist es auch denkbar, dass das Steckerelement 26 der Aktuatoreinheit 14 lediglich einen Pin oder mehr als zwei Pins aufweist, über die die erste Zusatzeinheit 20 direkt an das Steckerelement 26 der Aktuatoreinheit 14 angebunden ist.

Zur Anbindung der ersten Zusatzeinheit 20 weist die erste Zusatzeinheit 20 ein Kabel 46 auf, das an einem Ende ein Steckerelement 48 umfasst. Das Steckerelement 48 ist dazu vorgesehen, mit dem Steckerelement 26 der Aktuatoreinheit 14 gekoppelt zu werden, um so die erste Zusatzeinheit 20 an die erste Aktuatoreinheit 14 anzubinden.

Die Steuereinheitsvorrichtung umfasst ein Zwischensteckerelement 50. Das Zwischensteckerelement 50 ist zwischen dem Steckerelement 26 der ersten Aktuatoreinheit 14 und dem Steckerelement 44 des Datenkabels und dem Steckerelement 48 des Kabels 46 der ersten Zusatzeinheit 20 angeordnet. Dabei weist das Zwischensteckerelement 50 auf einer ersten Seite einen Stecker 52 auf, der korrespondierend zu dem Steckerelement 26 der Aktuatoreinheit 14 ausgebildet ist. Der Stecker 52 der ersten Seite des Zwischensteckerelements 50 ist mit allen Pins des Steckerelements 26 der Aktuatoreinheit 14 verbunden. Auf einer zweiten Seite bildet das Zwischensteckerelement 50 zwei voneinander getrennte Stecker 54, 56 aus. Der erste Stecker 54 auf der zweiten Seite des Zwischensteckerelements 50 ist zur Verbindung mit dem Steckerelement 44 des Datenkabels 32 vorgesehen, das mit der Steuer- und Regeleinheit 12 verbunden ist, und ist mit den ersten Pins des Steckerelements 26 der ersten Aktuatoreinheit 14 elektrisch gekoppelt. Der zweite Stecker 56 auf der zweiten Seite des Zwischensteckerelements 50 ist zur Verbindung mit dem Steckerelement 48 des Kabels 46 der Zusatzeinheit 20 vorgesehen und ist mit den zwei weiteren Pins elektrisch gekoppelt, die für den Eingang der Zusatzeinheit 20 vorgesehen sind. Mittels des Zwischensteckerelements 50 ist das Datenkabel 32 zur Anbindung an die Steuer- und Regeleinheit 12 und das Kabel 46 der ersten Zusatzeinheit 20 einfach mit dem Steckerelement 26 der Aktuatoreinheit 14 koppelbar. Grundsätzlich ist es auch denkbar, dass die Steuereinheitsvorrichtung kein Zwischensteckerelement 50 aufweist und das Steckerelement 44 des Datenkabels 32 zur Anbindung an die Steuer- und Regeleinheit 12 vorgesehen ist sowie das Steckerelement 48 des Kabels 46 der Zusatzeinheit 20 so ausgebildet sind, dass sie beide zeitgleich direkt an dem Steckerelement 26 der Aktuatoreinheit 14 angebracht sein können.

Die Steuereinheitsvorrichtung umfasst eine zweite Zusatzeinheit 22. Die zweite Zusatzeinheit 22 ist dabei als ein Aktorelement ausgebildet. Die als Aktorelement ausgebildete zweite Zusatzeinheit 22 ändert ihren Zustand aufgrund einer Ansteuerung durch die Steuer- und Regeleinheit 12. Das Aktorelement ist als ein LED-Signalelement ausgebildet. Die zweite Zusatzeinheit 22 ist dabei über die zweite Aktuatoreinheit 16 mit der Steuer- und Regeleinheit 12 gekoppelt. Die zweite Aktuatoreinheit 16 ist physikalisch in Reihe mit der ersten Aktuatoreinheit 14 geschaltet. Dabei ist es ebenfalls denkbar, dass die Aktuatoreinheiten 14, 16 physikalisch parallel oder sternförmig geschaltet sind. Dazu weist die erste Aktuatoreinheit 14 ein zweites Steckerelement 58 auf. An das zweite Steckerelement 58 der ersten Aktuatoreinheit 14 ist ein Datenkabel 60 angebunden, über das die zweite Aktuatoreinheit 16 über ein erstes Steckerelement 28 der zweiten Aktuatoreinheit 16 an die zweite Aktuatoreinheit 16 angebunden ist. Die zweite Aktuatoreinheit 16 ist damit über die erste Aktuatoreinheit 14 mit der Steuer- und Regeleinheit 12 gekoppelt. Die zweite Zusatzeinheit 22 ist dabei äquivalent zu der Anbindung der ersten Zusatzeinheit 20 an die erste Aktuatoreinheit 14 an die zweite Aktuatoreinheit 16 angebunden. Die zweite Zusatzeinheit 22 weist ebenfalls ein Kabel 62 mit einem Steckerelement 64 auf, über das die zweite Zusatzeinheit 22 mit dem ersten Steckerelement 28 der zweiten Aktuatoreinheit 16 gekoppelt ist. Dabei weist das erste Steckerelement 28 der zweiten Aktuatoreinheit 16 zwei Pins auf, über die die zweite Zusatzeinheit 22 an die zweite Aktuatoreinheit 16 angebunden ist. Die zwei Pins, über die die zweite Zusatzeinheit 22 an die zweite Aktuatoreinheit 16 und darüber an die Steuer- und Regeleinheit 12 angebunden ist, sind als Schaltausgänge ausgebildet. Über die als Schaltausgänge ausgebildeten Schaltpins wird die als Aktorelement ausgebildete zweite Zusatzeinheit 22 angesteuert.

Die Steuereinheitsvorrichtung umfasst eine dritte Zusatzeinheit 24, die über die dritte Aktuatoreinheit 18 an die Steuer- und Regeleinheit 12 angebunden ist. Die dritte Zusatzeinheit 24 ist ebenfalls als ein Aktorelement ausgebildet, das hier nicht näher beschrieben werden soll. Dabei ist es grundsätzlich auch denkbar, dass die dritte Zusatzeinheit 24 als ein Sensorelement ausgebildet ist. Des Weiteren ist es denkbar, dass die Steuereinheitsvorrichtung weitere Aktuatoreinheiten aufweist, über die jeweils eine weitere Zusatzeinheit der Steuereinheitsvorrichtung an die Steuer- und Regeleinheit 12 angebunden ist. Es ist grundsätzlich denkbar, dass die Eingänge oder Ausgänge über die Zusatzeinheiten 20, 22, 24 an die integrierte Steuereinheit der Aktuatoreinheiten 14, 16, 18 angebunden sind und digital oder analog von der integrierten Steuereinheit verarbeitet werden.

### Bezugszeichen

- 10: Flugzeugsitz
- 12: Steuer- und/oder Regeleinheit
- 14: Aktuatoreinheit
- 16: Aktuatoreinheit
- 18: Aktuatoreinheit
- 20: Zusatzeinheit
- 22: Zusatzeinheit
- 24: Zusatzeinheit
- 26: Steckerelement
- 28: Steckerelement
- 30: Rückenlehne
- 32: Datenkabel
- 34: Leitung
- 36: Leitung
- 38: Leitung
- 40: Steckerelement
- 42: Steckerelement
- 44: Steckerelement
- 46: Kabel
- 48: Steckerelement
- 50: Zwischensteckerelement
- 52: Stecker
- 54: Stecker
- 56: Stecker
- 58: Steckerelement
- 60: Datenkabel
- 62: Kabel
- 64: Steckerelement

## Patentansprüche

1. Steuereinheitsvorrichtung für einen Flugzeugsitz (10), mit einer Steuer- und/oder Regeleinheit (12), mit zumindest einer mit der Steuer- und/oder Regeleinheit (12) gekoppelten Aktuatoreinheit (14, 16, 18), welche zumindest einen Aktuator umfasst, der dazu vorgesehen ist, elektrische Signale in eine Bewegung umzusetzen, und mit zumindest einer Zusatzeinheit (20, 22, 24), wobei die Zusatzeinheit (20, 22, 24) über die Aktuatoreinheit (14, 16, 18) mit der Steuer- und/oder Regeleinheit (12) gekoppelt ist, wobei die Aktuatoreinheit (14, 16, 18) zumindest ein Steckerelement (26, 28) umfasst, über das die Aktuatoreinheit (14, 16, 18) mit der Steuer- und/oder Regeleinheit (12) gekoppelt ist, wobei die Zusatzeinheit (20, 22, 24) über das Steckerelement (26, 28) an die Aktuatoreinheit (14, 16, 18) angebunden ist, wobei das Steckerelement (26, 28) zumindest einen Pin aufweist, über den die Aktuatoreinheit (14, 16, 18) mit der Steuer- und/oder Regeleinheit (12) verbunden ist, und zumindest einen weiteren Pin aufweist, über den die Zusatzeinheit (20, 22, 24) mit der Aktuatoreinheit (14, 16, 18) verbunden ist, wobei die Aktuatoreinheit (14, 16, 18) eine integrierte Steuereinheit aufweist, die zumindest einen Eingang aufweist, über den der Pin für die Zusatzeinheit (20, 22, 24) angebunden ist.

2. Steuereinheitsvorrichtung nach einem der vorhergehenden Ansprüche, **dadurch gekennzeichnet, dass** die Zusatzeinheit (20) als ein Sensorelement ausgebildet ist.

3. Steuereinheitsvorrichtung nach einem der vorhergehenden Ansprüche, **dadurch gekennzeichnet, dass** die Zusatzeinheit (22, 24) als ein Aktorelement ausgebildet ist.

4. Steuereinheitsvorrichtung nach einem der vorhergehenden Ansprüche, **dadurch gekennzeichnet, dass** das Steckerelement (26, 28) als ein luftfahrtzugelassenes Steckerelement ausgebildet ist.

5. Steuereinheitsvorrichtung nach einem der vorhergehenden Ansprüche, **dadurch gekennzeichnet, dass** das Steckerelement (26, 28) als ein D-Sub 9 Stecker ausgebildet ist.

6. Verfahren zur Anbindung einer Aktuatoreinheit (14, 16, 18), welche zumindest einen Aktuator umfasst, der dazu vorgesehen ist, elektrische Signale in eine Bewegung umzusetzen, und einer Zusatzeinheit (20, 22, 24) an eine Steuer- und/oder Regeleinheit (12), wobei die Zusatzeinheit (20, 22, 24) über die Aktuatoreinheit (14, 16, 18) an die Steuer- und/oder Regeleinheit (12) angebunden wird, wobei die Aktuatoreinheit (14, 16, 18) zumindest ein Steckerelement (26, 28) umfasst, über das die Aktuatoreinheit (14, 16, 18) mit der Steuer- und/oder Regeleinheit (12) gekoppelt wird, wobei die Zusatzeinheit (20, 22, 24) über das Steckerelement (26, 28) an die Aktuatoreinheit (14, 16, 18) angebunden wird, wobei das Steckerelement (26, 28) zumindest einen Pin aufweist, über den die Aktuatoreinheit (14, 16, 18) mit der Steuer- und/oder Regeleinheit (12) verbunden wird, und zumindest einen weiteren Pin aufweist, über den die Zusatzeinheit (20, 22, 24) mit der Aktuatoreinheit (14, 16, 18) verbunden wird, wobei die Aktuatoreinheit (14, 16, 18) eine integrierte Steuereinheit aufweist, die zumindest einen Eingang aufweist, über den der Pin für die Zusatzeinheit (20, 22, 24) angebunden wird.

7. Flugzeugsitz mit einer Steuereinheitsvorrichtung nach einem der Ansprüche 1 bis 5.

## Claims

1. Control unit device for an aircraft seat (10), with a control and/or regulation unit (12), with at least one actuator unit (14, 16, 18) that is coupled with the control and/or regulation unit (12) and comprises at least one actuator which is configured for converting electrical signals into movement, and with at least one additional unit (20, 22, 24),
the additional unit (20, 22, 24) being coupled with the control and/or regulation unit (12) via the actuator unit (14, 16, 18),
the actuator unit (14, 16, 18) comprising at least one plug element (26, 28), via which the actuator unit (14, 16, 18) is coupled with the control and/or regulation unit (12),
the additional unit (20, 22, 24) being connected to the actuator unit (14, 16, 18) via the plug element (26, 28),
the plug element (26, 28) comprising at least one pin, via which the actuator unit (14, 16, 18) is connected with the control and/or regulation unit (12), and comprising at least one further pin, via which the additional unit (20, 22, 24) is connected with the actuator unit (14, 16, 18),
the actuator unit (14, 16, 18) comprising an incorporated control unit that has at least one entry, via which the pin for the additional unit (20, 22, 24) is connected.

2. Control unit device according to one of the preceding claims,
**characterised in that** the additional unit (20) is implemented as a sensor element.

3. Control unit device according to one of the preceding claims,
**characterised in that** the additional unit (22, 24) is implemented as an actor element.

4. Control unit device according to one of the preceding claims,
**characterised in that** the plug element (26, 28) is embodied as a plug element approved for aviation.

5. Control unit device according to one of the preceding claims,
**characterised in that** the plug element (26, 28) is embodied as a D-Sub 9 plug.

6. Method for a connection of an actuator unit (14, 16, 18) comprising at least one actuator, which is configured for converting electrical signals into movement, and of an additional unit (20, 22, 24) to a control and/or regulation unit (12),
the additional unit (20, 22, 24) being connected to the control and/or regulation unit (12) via the actuator unit (14, 16, 18),
the actuator unit (14, 16, 18) comprising at least one plug element (26, 28), via which the actuator unit (14, 16, 18) is coupled with the control and/or regulation unit (12),
the additional unit (20, 22, 24) being connected to the actuator unit (14, 16, 18) via the plug element (26, 28),
the plug element (26, 28) comprising at least one pin, via which the actuator unit (14, 16, 18) is connected with the control and/or regulation unit (12), and comprising at least one further pin, via which the additional unit (20, 22, 24) is connected with the actuator unit (14, 16, 18),
the actuator unit (14, 16, 18) comprising an incorporated control unit that has at least one entry, via which the pin for the additional unit (20, 22, 24) is connected.

7. Aircraft seat with a control unit device according to one of claims 1 to 5.

## Revendications

1. Dispositif d'unité de commande pour un siège d'avion (10), avec une unité de commande et/ou régulation (12), avec au moins une unité d'actionnement (14, 16, 18) couplée avec l'unité de commande et/ou régulation (12) et comprenant au moins un actionneur qui est configuré pour convertir des signaux électriques dans mouvement, et avec au moins une unité additionnelle (20, 22, 24),
l'unité additionnelle (20, 22, 24) étant couplée avec l'unité de commande et/ou régulation (12) par le biais de l'unité d'actionnement (14, 16, 18),
l'unité d'actionnement (14, 16, 18) comprenant au moins un élément fiche mâle (26, 28), par le biais duquel l'unité d'actionnement (14, 16, 18) est couplée avec l'unité de commande et/ou régulation (12),
l'unité additionnelle (20, 22, 24) étant raccordée à l'unité d'actionnement (14, 16, 18) par le biais de l'élément fiche mâle (26, 28),
l'élément fiche mâle (26, 28) comprenant au moins une broche, par le biais de laquelle l'unité d'actionnement (14, 16, 18) est connectée avec l'unité de commande et/ou régulation (12), et comprenant au moins une broche de plus, par le biais de laquelle l'unité additionnelle (20, 22, 24) est connectée avec l'unité d'actionnement (14, 16, 18),
l'unité d'actionnement (14, 16, 18) comprenant une unité de commande intégrée qui comporte au moins une entrée, par laquelle la broche pour l'unité additionnelle (20, 22, 24) est raccordée.

2. Dispositif d'unité de commande selon l'une quelconque des revendications précédentes,
**caractérisé en ce que** l'unité additionnelle (20) est réalisée comme élément capteur.

3. Dispositif d'unité de commande selon l'une quelconque des revendications précédentes,
**caractérisé en ce que** l'unité additionnelle (22, 24) est réalisée comme élément actionneur.

4. Dispositif d'unité de commande selon l'une quelconque des revendications précédentes,
**caractérisé en ce que** l'élément fiche mâle (26, 28) est réalisé comme élément fiche mâle approuvé pour l'aviation.

5. Dispositif d'unité de commande selon l'une quelconque des revendications précédentes,
**caractérisé en ce que** l'élément fiche mâle (26, 28) est réalisé comme fiche D-Sub 9.

6. Procédé pour un raccordement d'une unité d'actionnement (14, 16, 18) comprenant au moins un actionneur qui est configuré pour convertir des signaux électriques dans mouvement, et d'une unité additionnelle (20, 22, 24) à une unité de commande et/ou régulation (12),
l'unité additionnelle (20, 22, 24) étant raccordée à l'unité de commande et/ou régulation (12) par le biais de l'unité d'actionnement (14, 16, 18),
l'unité d'actionnement (14, 16, 18) comprenant au moins un élément fiche mâle (26, 28), par le biais duquel l'unité d'actionnement (14, 16, 18) est couplée avec l'unité de commande et/ou régulation (12),
l'unité additionnelle (20, 22, 24) étant raccordée à l'unité d'actionnement (14, 16, 18) par le biais de l'élément fiche mâle (26, 28),
l'élément fiche mâle (26, 28) comportant au moins une broche, par le biais de laquelle l'unité d'actionnement (14, 16, 18) est connectée avec l'unité de commande et/ou régulation (12), et comportant au moins une broche de plus, par le biais de laquelle l'unité additionnelle (20, 22, 24) est connectée avec l'unité d'actionnement (14, 16, 18),
l'unité d'actionnement (14, 16, 18) comprenant une unité de commande intégrée qui comporte au moins une entrée par laquelle la broche pour l'unité additionnelle (20, 22, 24) est raccordée.

7. Siège d'avion avec un dispositif d'unité de commande selon l'une quelconque des revendications 1 à 5.
